# EUROPÄISCHE PATENTSCHRIFT

(11) **EP 1 131 665 B1**
(45) Veröffentlichungstag und Bekanntmachung des Hinweises auf die Patenterteilung: **02.06.2004**
(21) Anmeldenummer: 00964212.5
(22) Anmeldetag: 20.09.2000
(51) Int. Cl.: G02B 21/16, G02B 5/02

(54) **MIKROSKOP, VORZUGSWEISE ZUR INSPEKTION BEI DER HALBLEITERFERTIGUNG**
MICROSCOPE, ESPECIALLY MICROSCOPE USED FOR INSPECTION IN SEMICONDUCTOR MANUFACTURE
MICROSCOPE S'UTILISANT DE PREFERENCE POUR DES OPERATIONS D'INSPECTION LORS DE LA FABRICATION DE SEMI-CONDUCTEURS

(30) Priorität: 29.09.1999 DE 19946594
(43) Veröffentlichungstag der Anmeldung: 12.09.2001
(73) Patentinhaber: CARL ZEISS JENA GmbH, 07745 Jena (DE)
(72) Erfinder: ENGEL, Thomas, 99102 Erfurt-Niederaissa (DE); HARNISCH, Wolfgang, 07778 Lehesten (DE); SCHELER, Roland, 07747 Jena (DE)
(86) Internationale Anmeldenummer: PCT/EP2000/009199
(87) Internationale Veröffentlichungsnummer: WO 2001/023940

(56) Entgegenhaltungen:
- EP-A- 0 589 179
- US-A- 4 256 363
- INSPEC Abstract of "Pribory i Tekhnika Eksperimenta" July/Aug. 1990, USSR Vol. 33, Nr.4, P. 223-224 A.D. Kudanov et al.: "Low-loss diffusing element for suppression of spurious interference from laser illuminator" XP002160840
- "REDUCTION OF COHERENCE-RELATED NOISE IN LASER BASED IMAGING SYSTEMS" IBM TECHNICAL DISCLOSURE BULLETIN,US,IBM CORP. NEW YORK, Bd. 37, Nr. 12, 1. Dezember 1994 (1994-12-01), Seiten 469-472, XP000487855 ISSN: 0018-8689

## Beschreibung

Die Erfindung betrifft die Einkopplung von gepulster Laserstrahlung in ein Mikroskop vorzugsweise für die Qualitätskontrolle und Defektklassifikation von Masken für die Halbleiterherstellung.

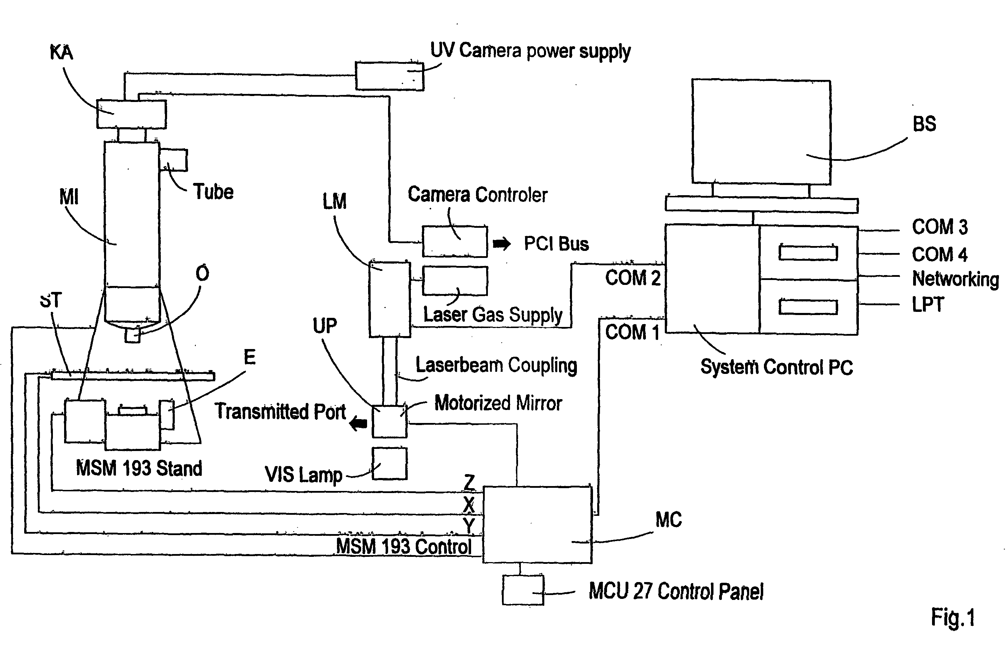

Das zu prüfende Objekt wird vorteilhaft bei einer Bildaufnahme mit mehreren Laserpulsen beaufschlagt.
Hierbei können innerhalb eines oder weniger Pulse bereits Intensitätsmodulationen des Laserprofiles von bis zu 40 % auftreten, die die Auswertung beeinträchtigen.
Fig.1 zeigt ein Gesamtschema eines Inspektionsgerätes, bestehend aus einem Lasermodul LM mit einem gepulsten UV- Laser, einem Übertragungsport UP einem Mikroskop MI mit einem Objektiv O und einem Scanningtisch ST,
einer CCD- Kamera KA, einem Bildschirm BS und einem Mikroskopcontroler MC.

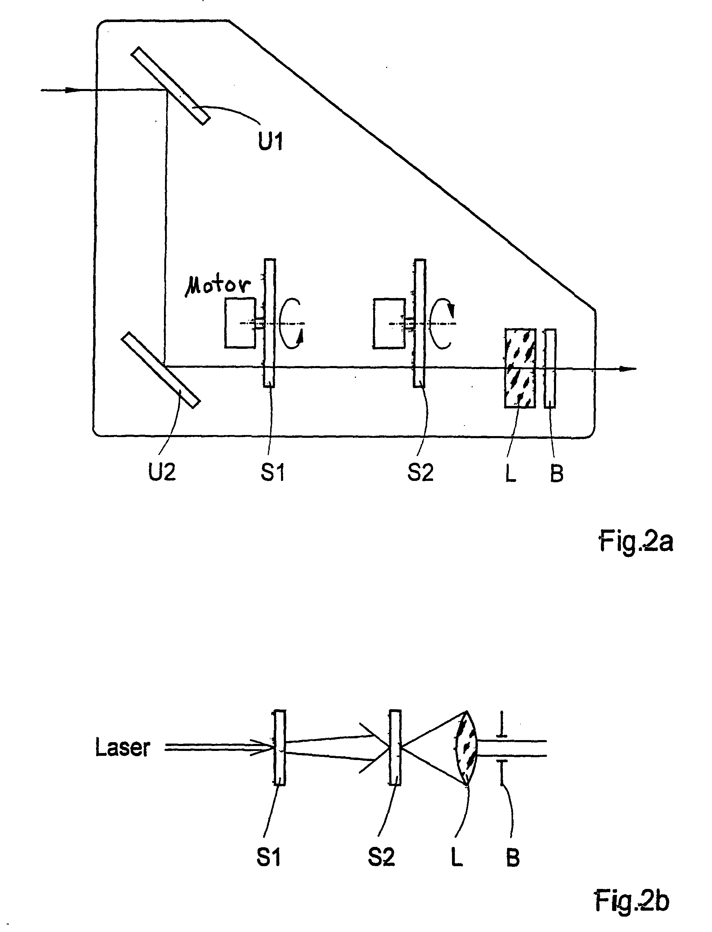

In Fig. 2a und 2b ist eine Einkoppeleinheit UP für den Laserstrahl in das Mikroskop MI dargestellt.
Das Laserlicht gelangt über Umlenkspiegel U1, U2 auf eine erste rotierende Streuscheibe S1 und von dieser auf eine zweite , vorzugsweise entgegengesetzt rotierende zweite Streuscheibe S2 sowie über eine Linse L zur Strahlaufweitung und eine Blende B in den nicht dargestellten Mikroskopstrahlengang über Eingang E in Fig.1 und beleuchtet das zu prüfende Objekt.
Durch die mindestens eine Streuscheibe wird das Laserprofil geebnet
Die Streuscheibe rotiert mit einer Geschwindigkeit, die gegenüber dem Abstand zwischen zwei Laserpulsen relativ gering ist.
Das bedeutet, daß für die Dauer-eines Laserpulses von beispielsweise 10 ns die Streuscheibe quasi stillsteht , sich aber in dem Zeitraum zwischen zwei Laserpulsen
(Wiederholfrequenz z.B. 200 Hz ) etwas weiterbewegt, bevor der nächste Laserpuls erfolgt.
Das hat den Vorteil, daß die Granulierung oder Körnigkeit der Streuscheibe hierdurch ausgemittelt wird und zudem auch die Granulierung, die durch die Kohärenz der Laserstrahlung verursacht wird (speckle), ausgemittelt wird.

Das bedeutet eine Verringerung des Rauschens und Kontrasterhöhung im Bild und somit eine Verbesserung der Bildqualität.

Aus dem Dokument :
INSPEC abstract of "Pribory i Tekhnika Experimenta" July-Aug. 1990, USSR Vol. 33, Nr. 4, P. 223-224 Kundakov et al:
"Low-loss diffusing element for suppresion of spurious interference from laser illuminator"
ist ein Mikroskop mit einem Laser zur dessen Beleuchtung bekannt, wobei dem Laser zur Homogenisierung der Beleuchtung eine rotierende Streuscheibe nachgeordnet ist.

Die Größenordnung der Drehgeschwindigkeit der Streuscheibe kann dabei im einfach zu realisierenden Bereich von ca. 1 Umdrehung pro Sekunde ( Geschwindigkeit im cm/ s Bereich) liegen, um bei einer angenommenen Körnungsgröße von 0,1 mm zu erreichen, daß mindestens eine Verschiebung um eine Körnungsgröße zwischen zwei Pulsen erfolgt.

Der Homogenisierungseffekt wird durch eine zweite in entgegengesetzter Richtung rotierende Streuscheibe noch verstärkt.
Als Streuscheiben können neben granulierten( geätzt oder gestrahlt) auch holographisch hergestellte Scheiben verwendet werden.
Auch CGH (computergenerierte Hologramme) können zur Homogenisierung eingesetzt werden.

## Patentansprüche

1. Beleuchtungseinrichtung für einem Mikroskop mit einem Laser und einer rotierenden Streuscheibe zur Homogenisierung der Beleuchtung,
**dadurch gekennzeichnet, daß**
die Beleuchtung zur Inspektion bei der Halbleiterfertigung mittels eines gepulsten Lasers erfolgt und zwei direkt oder indirekt hintereinander im Strahlengang angeordnete entgegengesetzt rotierende Streuscheiben vorgesehen sind.

2. Beleuchtungseinrichtung für einem Mikroskop mit einem Laser und einer rotierenden Streuscheibe zur Homogenisierung der Beleuchtung,
**dadurch gekennzeichnet, daß**
die Beleuchtung zur Inspektion bei der Halbleiterfertigung mittels eines gepulsten Lasers erfolgt, die Streuscheibe granuliert oder holografisch ausgebildet ist und die Größenordnung der Drehgeschwindigkeit derart ist, daß zwischen zwei Laserpulsen eine Drehung um mindestens eine Körnungsgröße oder der Auflösungsgrenze der holografischen Struktur erfolgt.

## Claims

1. Illumination device for a microscope having a laser and a rotating diffusing disc to render the illumination homogeneous
**characterised in that**
the illumination for inspection purposes in semi-conductor manufacture is effected by means of a pulsed laser and two oppositely rotating diffusing discs are provided which are disposed one directly or indirectly behind the other in the beam path.

2. Illumination device for a microscope having a laser and a rotating diffusing disc to render the illumination homogeneous,
**characterised in that**
the illumination for inspection purposes in semi-conductor manufacture is effected by means of a pulsed laser, the diffusing disc is formed in a granulated or holographic manner and the magnitude of the speed of rotation is such that a rotation about at least the size of one grain or the resolving limit of the holographic structure takes place between two laser pulses.

## Revendications

1. Installation d'éclairage pour un microscope avec un laser et un verre diffusant tournant pour l'homogénéisation de l'éclairage, **caractérisée en ce que** l'éclairage pour l'inspection lors de la fabrication de semi-conducteurs a lieu au moyen d'un laser pulsé et **en ce que** sont prévus deux verres diffusants disposés directement ou indirectement l'un derrière l'autre dans la marche des rayons, tournant en sens inverse.

2. Installation d'éclairage pour un microscope avec un laser et un verre diffusant tournant pour l'homogénéisation de l'éclairage, **caractérisée en ce que** l'éclairage pour l'inspection lors de la fabrication de semi-conducteurs a lieu au moyen d'un laser pulsé, que le verre diffusant est réalisé de manière granulée ou holographique et que l'ordre de grandeur de la vitesse de rotation est telle qu'entre deux impulsions laser a lieu une rotation d'au moins une grandeur de grain ou de la limite de résolution de la structure holographique.
